# FASCICULE DE BREVET EUROPEEN

(11) **EP 0 847 848 B1**
(45) Date de publication et mention de la délivrance du brevet: **09.04.2003**
(21) Numéro de dépôt: 97810901.5
(22) Date de dépôt: 24.11.1997
(51) Int. Cl.: B29C 70/78

(54) **Pièce comportant un corps moulé et un élément décoratif incrusté et procédé de fabrication de cette pièce**
Gegenstand bestehend aus einem Formteil und einem eingelegten dekorativen Element und Verfahren zu seiner Herstellung
Article comprising a moulded body and an inlaid decorative element and process for its manufacture

(30) Priorité: 11.12.1996 CH 303796
(43) Date de publication de la demande: 17.06.1998
(73) Titulaire: WENGER S.A., CH-2800 Delémont (CH)
(72) Inventeur: Ackeret, Peter, 8700 Küsnacht (CH); Cachot, Maurice, 2800 Delémont (CH)
(74) Mandataire: BOVARD AG - Patentanwälte

(56) Documents cités:
- EP-A- 0 412 601
- EP-A- 0 743 166
- DE-A- 3 622 596
- FR-A- 2 643 028
- US-A- 5 226 993
- F. STRASSER: "MOLDING METAL INSERTS INTO PLASTIC PARTS" PLASTICS ENGINEERING, vol. 36, no. 10, octobre 1980, USA, pages 17-22, XP002034382

## Description

La présente invention concerne une pièce selon le préambule de la revendication 1 et un procédé de fabrication de cette pièce selon le préambule de la revendication 14. En particulier, la présente invention concerne un couteau de poche multifonctionnel dont au moins une côte en matériau plastique moulé incorpore un élément décoratif incrusté, par exemple une croix suisse.

Les couteaux de poche multifonctionnels de type "couteau suisse" comprennent de manière générale plusieurs lames pivotant entre deux côtes. Les deux côtes du couteau sont soit métalliques, soit plus fréquemment formées d'une tôle métallique recouverte de plastique moulé par pressage ou injection. Dans ce dernier cas, au moins une des deux côtes du couteau comprend généralement un élément décoratif, par exemple une croix suisse, un texte ou un logo publicitaire.

Par élément décoratif, on entend dans la suite de la description et dans les revendications en fait n'importe quel dessin, motif, logo ou texte, de nature esthétique, publicitaire ou descriptive par exemple, et qui figure sur une surface externe de la pièce fabriquée.

On connaît différents procédés adaptés pour incruster un élément décoratif sur un flanc du couteau. Un procédé économique consiste simplement à imprimer par des techniques conventionnelles, par exemple par sérigraphie, un texte ou un dessin sur le flanc du couteau. Il est difficile d'imprimer proprement sur les surfaces pas parfaitement planes du couteau. En outre, une telle impression directement sur le plastique résiste mal au frottement et à l'usure auxquels est soumis un couteau de poche.

Un autre procédé connu consiste à découper dans une tôle d'aluminium d'environ un millimètre d'épaisseur un élément décoratif de forme par exemple quadrangulaire et soigneusement imprimé avec la croix suisse ou tout autre motif décoratif. Cet élément est ensuite collé dans un évidement adapté usiné à cet effet dans une côte du couteau. Ce procédé est assez coûteux à mettre en oeuvre. En outre, il est difficile de contrôler très précisément la profondeur de l'évidement usiné, en sorte qu'il subsiste fréquemment un rebord inesthétique autour de l'élément décoratif incrusté.

Un autre procédé connu consiste à étamper le motif décoratif dans une tôle d'acier très fine, d'environ 0,1 millimètre puis à l'incruster ensuite dans la côte du couteau avec une forte pression et en chauffant de manière appropriée. Ce procédé est plus économique et permet de maîtriser avec précision la profondeur d'incrustation en sorte que l'élément métallique arrive exactement à fleur de la surface externe de la côte du couteau.

Ce procédé est cependant difficile à appliquer lorsque l'élément décoratif à incruster inclut plusieurs parties devant être positionnées et/ou espacées précisément l'une par rapport à l'autre. C'est notamment le cas lorsque l'élément décoratif comporte une croix suisse entourée par un cadre quadrangulaire ou scutiforme. C'est également le cas par exemple lorsque l'élément décoratif est formé d'un texte avec plusieurs caractères disjoints, d'un logo ou d'un emblème en plusieurs parties. Des difficultés peuvent survenir même lorsque l'élément décoratif comporte un seul fragment - par exemple une seule lettre - comprenant des parties peu solidaires entre elles - par exemple les deux extrémités d'un grand "C". Dans ce cas, la solution généralement adoptée consiste à fixer au moyen d'attaches les parties devant être positionnées l'une par rapport à l'autre. Dans le cas d'une croix suisse par exemple, il est connu de relier la croix au cadre par deux attaches discrètes prolongeant les extrémités des branches horizontales de la croix. De cette manière, la croix et le cadre peuvent être incrustés dans la côte moulée sans défauts de positionnement.

Ces attaches sont cependant peu esthétiques et modifient l'impression subjective créée par l'élément décoratif. C'est particulièrement le cas lorsque l'élément décoratif comporte un grand nombre de parties disjointes devant donc être reliées par un grand nombre d'attaches, par exemple lorsque l'élément décoratif est constitué par un texte de plusieurs lettres.

Le document EP-A-0 743 166 présente une pièce moulée comportant un élément décoratif incrusté à fleur de la surface externe de la pièce, conforme au préambule de la revendication 1.

Un but de la présente invention est de proposer une pièce améliorée comportant un corps moulé et un élément décoratif. En particulier, un but de la présente invention est de proposer un couteau de poche amélioré comportant au moins une côte en plastique moulé et un élément décoratif, par exemple une croix, incrusté dans la côte.

Un autre but est de proposer un procédé de fabrication amélioré d'une telle pièce. Selon l'invention, ces buts sont atteints au moyen d'une pièce comportant les éléments de la partie caractérisante de la revendication 1 et d'un procédé de fabrication comportant les éléments de la partie caractérisante de la revendication 14.

En particulier, le but de l'invention est atteint au moyen d'une pièce comportant un corps en matériau synthétique moulé et un élément décoratif incrusté à fleur de la surface externe dudit corps. L'élément décoratif est fabriqué à partir d'une feuille d'un deuxième matériau, par exemple d'une feuille métallique, et comporte au moins deux parties positionnées l'une par rapport à l'autre avec une ou des attaches. Au moins la plus grande portion des attaches se trouve au-dessous du plan (qui peut être un plan incurvé, par exemple convexe) occupé par la portion visible de l'élément décoratif. Cette portion des attaches est ainsi recouverte par le matériau synthétique du corps de la pièce.

L'invention sera mieux comprise au moyen de la description donnée à titre d'exemple et illustrée par les figures qui illustrent:

La figure 1A une vue en perspective d'un élément décoratif comportant deux parties positionnées l'une par rapport à l'autre avec deux attaches embouties selon l'invention.

La figure 1B une vue de dessus sur l'élément décoratif de la figure 1A.

La figure 1C une coupe de l'élément décoratif selon la ligne A-A sur la figure 1B.

La figure 2A une vue en perspective d'une portion de côte de couteau en plastique moulé comprenant un élément décoratif incrusté selon l'invention.

La figure 2B une coupe selon la ligne B-B sur la figure 2A.

La figure 3 une vue en perspective d'une feuille métallique étampée et emboutie de manière à définir plusieurs éléments décoratifs selon l'invention.

La figure 4A une vue de dessus sur l'élément décoratif de la figure 1A, illustrant les points d'appuis de l'élément décoratif lors du moulage de la pièce.

La figure 4B une vue en coupe du dispositif de moulage de la pièce, avant moulage.

La figure 4C une vue en coupe de la pièce et du dispositif de moulage de la pièce, au cours du moulage.

La figure 4D un agrandissement d'une portion de la figure 4C, montrant plus particulièrement l'élément décoratif au cours du moulage.

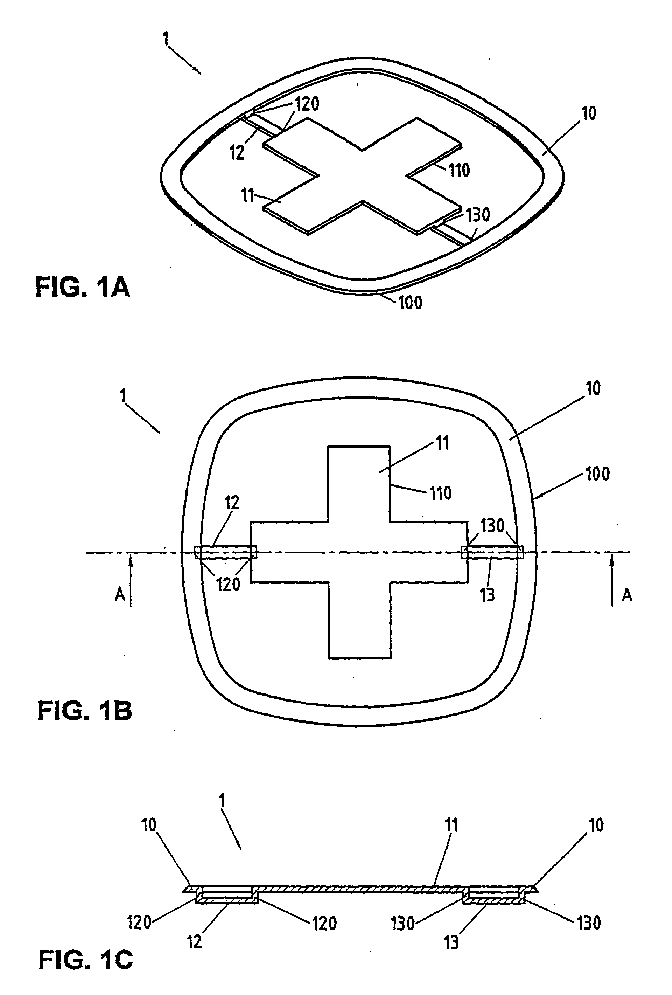

Les figures 1A à 1C illustrent à titre d'exemple un élément décoratif selon l'invention. Dans cet exemple, l'élément décoratif 1 est constitué par une croix suisse 11 entourée d'un cadre quadrangulaire 10. Il est destiné par exemple à l'incrustation dans la côte d'un couteau de poche multifonctionnel de type "couteau suisse". L'élément décoratif 1 est fabriqué par découpe, de préférence par étampage, à partir d'une fine feuille d'acier, par exemple à partir d'une feuille d'acier d'épaisseur 0,1 à 0,15 millimètres. La croix 11 et le cadre 10 doivent être positionnés avec précision sur le flanc du couteau. En particulier, il est important que la croix 11 soit parfaitement centrée au milieu du cadre 10. Dans ce but, l'élément décoratif 1 comporte des attaches, dans cet exemple deux attaches 12,13 reliant la croix 10 au cadre 11. Ces attaches n'ont pas d'autres fonctions que de positionner et d'espacer correctement les deux parties de l'élément 1. Comme on le voit en particulier sur la vue de dessus de la figure 1B, les attaches 12, 13 modifient considérablement l'impression visuelle créée par l'élément décoratif 1. Elles ne remplissent donc aucune fonction esthétique.

Selon l'invention, les attaches 12, 13 sont repoussées par emboutissage dans un plan différent du plan occupé par la portion visible de l'élément décoratif, c'est-à-dire au-dessous du plan occupé par la croix 11 et le cadre 10. Cette opération peut être effectuée assez facilement par des techniques connues d'emboutissage de l'élément 1. Les attaches repoussées ont une forme en U et comportent une portion sensiblement parallèle au plan occupé par la portion visible 10, 11 de l'élément décoratif ainsi que deux flancs latéraux 120, 130. Ces derniers sont de préférence sensiblement perpendiculaires audit plan occupé par la portion visible 10, 11, mais pourraient aussi être obliques. Il est important à cet effet de veiller lors de l'emboutissage à ce que les arêtes de démarcation entre les flancs latéraux 120, respectivement 130, et les parties 10, 11 de l'élément décoratif soient le plus net possible, c'est-à-dire parfaitement rectilignes et avec un angle d'arête très proche de 90 degrés.

Sur les figures 1A à 1C, la croix 11 est reliée au cadre 10 par deux attaches 12, 13 disposées symétriquement par rapport à la croix, entre le cadre 11 et les extrémités de deux branches opposées. Il est cependant possible d'utiliser un nombre d'attaches différent, par exemple quatre attaches réparties sur les quatre extrémités de la croix 11. L'invention s'applique également à des motifs décoratifs autres que des croix, par exemple à des textes, des dessins, des motifs ou des logos de nature publicitaire ou autre et comprenant différentes parties disjointes devant être reliées par un nombre d'attaches quelconque. Dans l'exemple illustré, la croix 11 et le cadre 10 sont obtenus à partir d'une feuille plane. La surface supérieure de l'élément décoratif 11 pourrait cependant présenter un certain relief ou une texture; en outre, le plan occupé par la croix 11 et le cadre 10 peut être incurvé avant ou après étampage et emboutissage. Enfin, selon le motif décoratif et la créativité de l'artiste, on pourrait prévoir des attaches dont seule une portion est repoussée par emboutissage. Il est aussi possible d'utiliser des attaches dont la profondeur d'emboutissage varie selon leur longueur, c'est-à-dire qui n'occupent pas un plan parallèle au plan de la croix 11 et du cadre 10.

Dans une variante préférentielle, au moins une portion des flancs latéraux 100, respectivement 110 du cadre 10, respectivement de la croix 11 est biaisée, ou biseautée, de façon à pouvoir la recouvrir partiellement de matériau synthétique, comme on le verra plus bas.

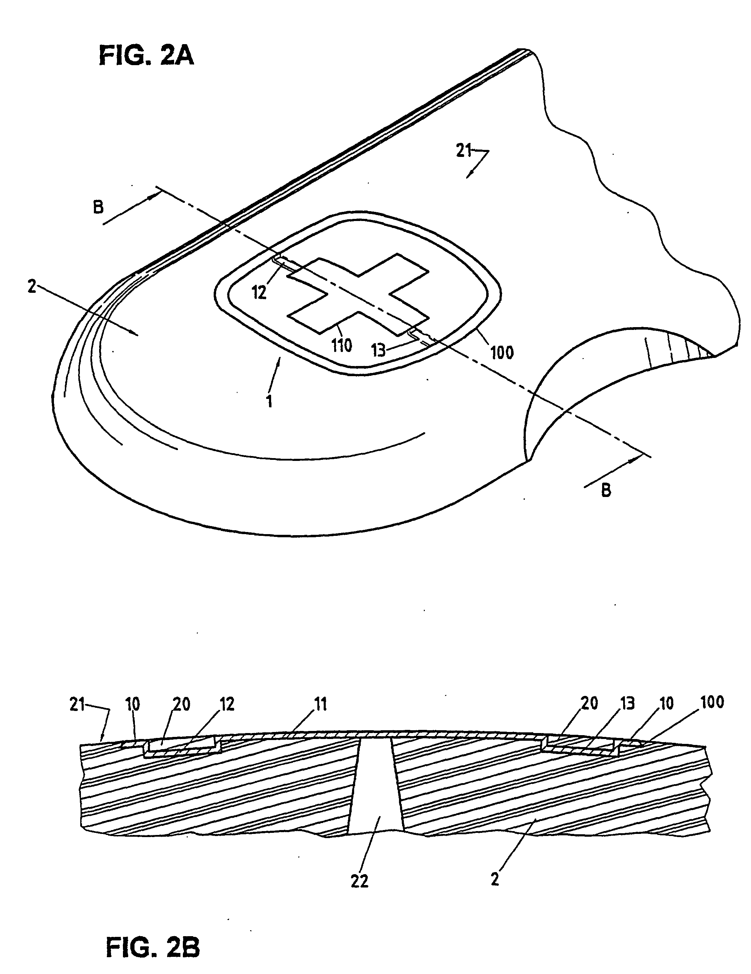

Les figures 2A et 2B illustrent à titre d'exemple de pièce une portion de côte 2 de couteau de poche comprenant une croix suisse 1 incrustée. La côte du couteau est en plastique moulé. La croix suisse 1 comprend deux portions 10, 11 incrustées à fleur de la surface externe 21 de la côte 2 et reliées par deux attaches 12, 13 repoussées au-dessous de cette surface externe. Les attaches 12, 13 sont complètement recouvertes par le plastique 20 de la côte 2, en sorte qu'elles ne sont plus visibles. Les attaches 12, 13 ne perturbent donc pas l'impression visuelle créée par le motif décoratif 12, 13, II est donc possible, si nécessaire, d'utiliser un grand nombre d'attaches pouvant être réparties avec un minimum de contraintes esthétiques.

On constate en particulier sur la figure 28 que la surface externe 21 de la côte du couteau 2 est convexe. L'élément décoratif 1 suit cette incurvation et reste ainsi parfaitement à fleur de la surface 21. De préférence, l'élément décoratif 1 est fabriqué par étampage puis emboutissage à partir d'une feuille métallique plane. Il n'est donc incurvé que lors de son incrustation dans la côte du couteau. Son élasticité naturelle tend alors à lui faire reprendre sa forme initiale et à le faire sortir de son logement. Il est toutefois maintenu plaqué par les attaches 12, 13 recouvertes de plastique moulé 20. Pour réduire encore le risque que des portions mal maintenues, par exemple les extrémités verticales de la croix 11 ou les angles du cadre 10, sortent de leur logement, au moins une portion des flancs latéraux 100, 110 est biaisée de manière à être recouverte de plastique moulé.

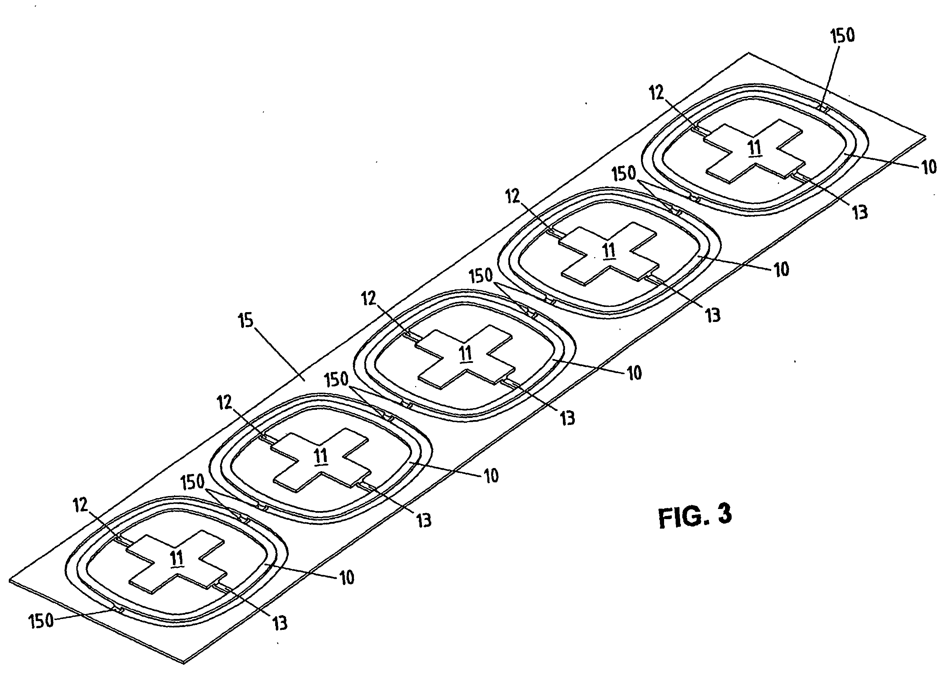

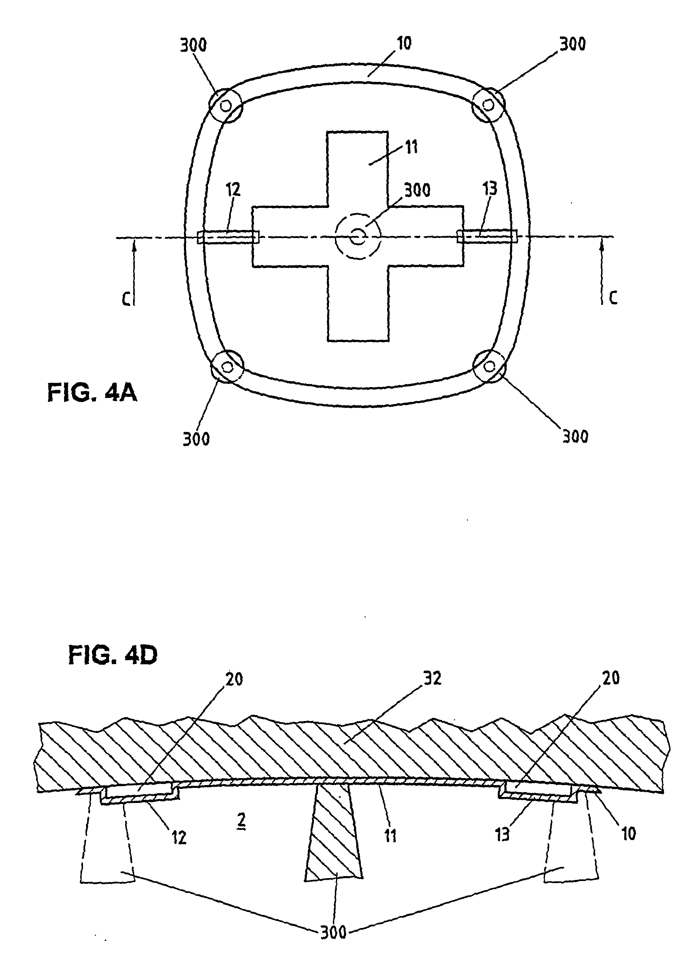

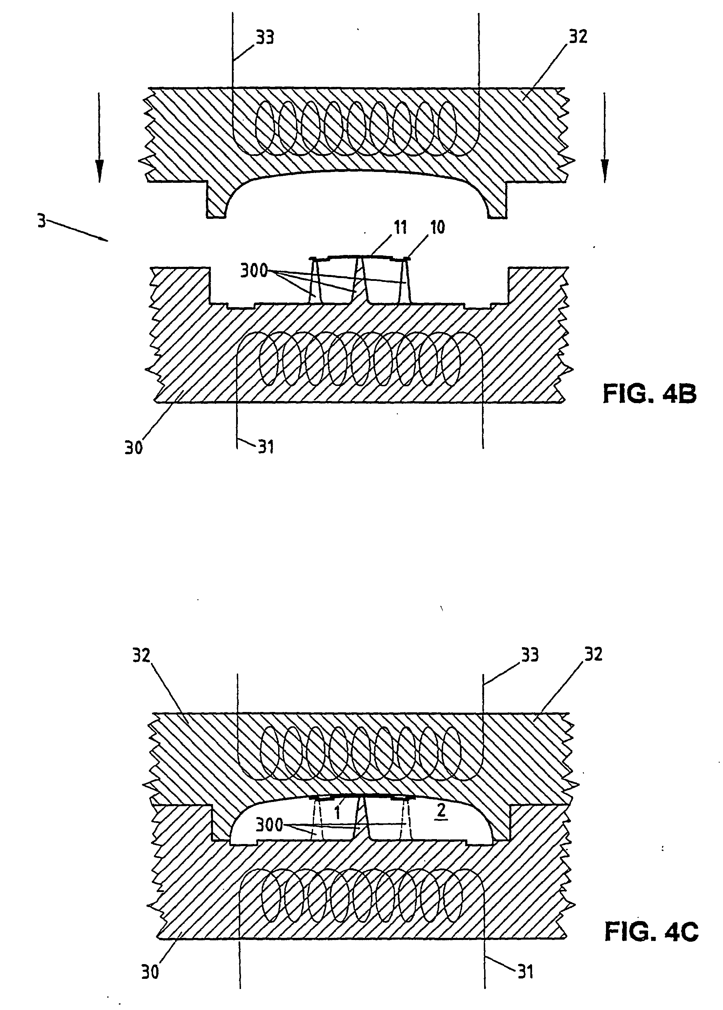

Nous allons maintenant décrire à l'aide des figures 3 et 4A à 4D le procédé de fabrication de pièces selon l'invention. Sur la figure 3, l'élément décoratif 1 est tout d'abord fabriqué par découpage à partir d'une feuille métallique 15 d'une épaisseur de 0,1 à 0,15 millimètres environ. Par découpage, on entend ici de préférence étampage. Selon le matériau de la feuille 15 et le nombre de pièces nécessaires, on préférera cependant effectuer le découpage au moyen d'une table à découpe conventionnelle, par laser, par photogravure, etc... Dans l'exemple illustré, les éléments décoratifs 1 sont découpés dans la feuille 1 en maintenant des liaisons 150 entre les éléments individuels 1 et le reste de la feuille 15. Les liaisons 150 seront découpées ou déchirées ultérieurement lors de l'incrustation des éléments 1 dans le corps des couteaux. De cette manière, il est possible de transporter, de manipuler et de stocker facilement un grand nombre d'éléments décoratifs réunis par bandes sur une feuille 15 prédécoupée. Dans une variante, les éléments découpés 1 sont maintenus sur une feuille adhésive pour leur manipulation et leur stockage avant utilisation.

Après découpe des éléments décoratifs 1, les deux attaches 12, 13 réunissant les deux parties 10 et 11 sont repoussées par emboutissage en dessous de la surface principale définie par la croix 11 et le cadre 10. Ces techniques d'emboutissage sont connues de l'homme du métier et nous ne les décrirons pas plus en détail ici. De préférence, les liaisons 150 sont également repoussées par emboutissage afin de faciliter leur séparation ultérieure et de repousser les résidus éventuels d'attaches 150 sous la surface externe 21 de la pièce moulée. A nouveau, il est important de veiller lors de l'emboutissage à ce que les arêtes de démarcation entre les attaches 150 repoussées et le cadre 11 soient le plus net possible, c'est-à-dire parfaitement rectilignes et avec un angle d'arête très proche de 90 degrés.

Après emboutissage des éléments décoratifs 1, ceux-ci sont transportés par des moyens connus jusqu'à la machine de moulage 3 (figure 4B) de la côte du couteau 2. La machine de moulage est ici constituée par une presse de moulage 3 conventionnelle. Le moule est formé de deux demi-coques de moulage 30 et 32. La demi-coque de moulage supérieure 32 permet de mouler la face externe 21 de la côte 2 tandis que la demi-coque de moulage inférieure 30 permet de mouler la face interne de cette côte. Des moyens de chauffage 31, respectivement 33 sont prévus pour chauffer les deux demi-coques 30, respectivement 32, à une température supérieure au point de fusion du plastique utilisé pour la côte.

L'élément décoratif 1 est positionné par des moyens non représentés, de préférence par un robot, sur un appui 300 à l'intérieur de la demi-coque inférieure 30. L'appui 300 peut avoir n'importe quelle forme adaptée à la forme de l'élément décoratif 1 découpé; dans cet exemple, l'appui 300 est constitué par cinq pointes fines supportant le centre de la croix suisse 11 ainsi que les quatre angles du cadre 10, comme illustré en particulier sur la figure 4A. D'autres formes et dispositions de l'appui 300 peuvent naturellement être imaginées. L'élément décoratif 1 est maintenu sur l'appui 300 par aimantation ou par vide d'air. La hauteur de l'appui 300 est prévue en sorte que l'élément décoratif 1 arrive exactement à fleur de la surface externe 21 de la côte moulée; c'est-à-dire que la hauteur des pointes 300 est égale à l'épaisseur de la côte à cet endroit moins l'épaisseur de l'élément décoratif 1.

Des moyens connus non représentés sont prévus pour amener le matériau plastique fondu entre les deux demi-coques. La matière à mouler peut consister en n'importe quel granulé ou poudre synthétique connue, par exemple en granulés de Celidor (marque déposée). Les deux parties du moule sont ensuite refermées en exerçant une pression appropriée (figure 4C et 4D). La surface supérieure de l'élément décoratif 1 arrive alors juste en contact avec la surface intérieure de la demi-coque supérieure 32.

Le moule est maintenu fermé assez longtemps et avec une pression suffisante pour assurer une répartition homogène du matériau dans le moule. En particulier, il est important de veiller à ce que la pression et la fluidité du plastique soient suffisantes pour qu'il recouvre parfaitement les attaches 12, 13 ainsi que, le cas échéant, les flancs biaisés 100, 110 de l'élément décoratif 1. La température est ensuite abaissée afin de faire durcir le plastique, puis la pièce 2 peut être démoulée. Si l'élément décoratif 1 est maintenu sur la saillie 300 par vide d'air, les moyens non représentés permettant de créer le vide d'air sont de préférence débranchés voir inversés pour faciliter le démoulage de la pièce 2.

Le résultat obtenu après démoulage est une pièce comprenant un élément décoratif 1 parfaitement à fleur de la surface externe 21 de la pièce. Des ouvertures 22 (figure 2B) correspondant à la saillie 300 subsistent derrière l'élément décoratif 1. Ces ouvertures sont toutefois totalement cachées par la croix 11 et le cadre 10 et demeurent ainsi invisibles une fois que la pièce 2 est collée sur le couteau multifonctionnel.

Un avantage supplémentaire procuré par l'invention est donc de permettre l'injection du corps 2 de la côte et l'incrustation de l'élément décoratif 1 en une seule opération et au moyen d'une seule machine.

D'autres procédés de moulage connus peuvent être mis en oeuvre pour fabriquer des côtes 2 comprenant un élément décoratif 1 avec des attaches 12, 13 recouvertes. Par exemple, un moulage par injection peut aussi être utilisé.

## Revendications

1. Pièce comportant un corps (2) en matériau synthétique moulé et un élément décoratif (1) incrusté à fleur de la surface externe (21) dudit corps, ledit élément décoratif étant fabriqué à partir d'une feuille (15) d'un deuxième matériau, ledit élément décoratif comportant au moins deux parties (10, 11) positionnées l'une par rapport à l'autre avec une ou des attaches (12, 13),
**caractérisée en ce que**
ledit élément décoratif est fabriqué à partir d'une feuille métallique, **en ce que** au moins la plus grande portion desdites attaches (12, 13) est repoussée par emboutissage au-dessous du plan occupé par la portion visible (10, 11) dudit élément décoratif (1), et **en ce que** au moins ladite plus grande portion des attaches (12, 13) est recouverte par ledit matériau synthétique (20).

2. Pièce selon la revendication précédente, **caractérisée en ce que** l'élément décoratif (1) comporte une partie interne (11) et une partie externe (10) encadrant la partie interne.

3. Pièce selon la revendication précédente, **caractérisée en ce que** ladite partie interne est constituée par une croix (11) et **en ce que** lesdites attaches (12, 13) sont disposées entre les extrémités d'au moins deux branches opposées de la croix (11) et ladite partie externe (10).

4. Pièce selon la revendication précédente, **caractérisée en ce que** ladite croix (11) est disposée symétriquement au centre de ladite partie externe (10).

5. Pièce selon l'une des revendications précédentes, **caractérisée en ce que** ladite surface externe (21) du corps et ledit plan occupé par la portion visible (10, 11) dudit élément décoratif (1) sont incurvés.

6. Pièce selon la revendication précédente, **caractérisée en ce qu'**au moins une portion (100, 110) des flancs latéraux dudit élément décoratif sont biaisés de façon à être partiellement recouverts de matériau synthétique.

7. Pièce selon l'une des revendications précédentes, **caractérisée en ce que** au moins une portion des attaches (12, 13) recouverte par ledit matériau synthétique (20) est sensiblement parallèle au plan occupé par la portion visible (10, 11) dudit élément décoratif (1).

8. Pièce selon la revendication précédente, **caractérisée en ce que** lesdites attaches (12, 13) comportent une portion sensiblement parallèle au plan occupé par la portion visible (10, 11) dudit élément décoratif (1) ainsi que deux flancs latéraux (120, 130) reliant ladite portion parallèle des attaches (12, 13) à ladite portion visible (10, 11) de l'élément décoratif (1).

9. Pièce selon la revendication précédente, **caractérisée en ce que** lesdits flancs latéraux (120, 130) des attaches (12, 13) sont sensiblement perpendiculaires audit plan occupé par la portion visible (10, 11) dudit élément décoratif (1).

10. Pièce selon la revendication 8, **caractérisée en ce que** lesdits flancs latéraux (120, 130) des attaches sont obliques par rapport audit plan occupé par la portion visible (10, 11) dudit élément décoratif (1).

11. Pièce selon l'une des revendications 8 à 10, **caractérisée en ce que** les arêtes de démarcation entre lesdits flancs latéraux (120, 130) et ladite portion visible (10, 11) de l'élément décoratif (1) sont rectilignes avec un angle d'arête proche de 90 degrés.

12. Pièce selon l'une des revendications précédentes, **caractérisée en ce qu'**elle est fabriquée par étampage en laissant subsister des liaisons (150) permettant de relier provisoirement ledit élément décoratif à ladite feuille métallique (15) après l'opération d'étampage, et **en ce que** lesdites liaisons (150) sont repoussées par emboutissage dans un plan différent de la portion visible (10, 11) avant leur séparation.

13. Couteau de poche comprenant au moins une côte selon l'une des revendications précédentes.

14. Procédé de fabrication d'une pièce (2) selon l'une des revendications précédentes, comprenant successivement les opérations suivantes:
découpage dans une feuille (15) métallique d'au moins un élément décoratif (1), ledit élément décoratif comportant au moins deux parties (10, 11) positionnées l'une par rapport à l'autre avec une ou des attaches (12, 13),
moulage de la pièce (2) et incrustation dudit élément décoratif (1) à fleur de la surface externe (21) de la pièce (2),
**caractérisé en ce que**, lors de l'incrustation de l'élément décoratif (1) par moulage, on met en oeuvre un élément décoratif (1):
- dont les parties (10, 11) sont obtenues par découpe dans une feuille (15) de matériau, avec des attaches (12, 13) prévues entre les dites parties (10, 11),
- dont la plus grande portion desdites attaches (12, 13) est repoussée par emboutissage au-dessous du plan occupé par la portion visible (10, 11) du dit élément décoratif (1) de manière à, lors du moulage, être recouverte de matériau synthétique (20).

15. Procédé selon la revendication précédente, **caractérisé en ce qu'**une pluralité d'éléments décoratifs (1) sont découpés simultanément dans une seule feuille métallique (15).

16. Procédé selon l'une des revendications 14 ou 15, **caractérisé en ce que** le ou les éléments décoratifs (1) restent provisoirement reliés à ladite feuille métallique (15) après l'opération de découpage par des liaisons (150), et **en ce que** lesdites liaisons (150) sont repoussées par emboutissage dans un plan différent de la portion visible (10, 11) avant leur séparation.

17. Procédé selon l'une des revendications 14 à 16, **caractérisé en ce que**, au cours de l'opération de moulage, ledit élément décoratif (1) est maintenu entre un premier élément de moule (32) et un deuxième élément de moule (30).

18. Procédé selon la revendication précédente, **caractérisé en ce que** le premier élément de moule (32) correspond à ladite surface externe (21) de la pièce, et **en ce que** le deuxième élément de moule (30) correspondant à la surface interne de la pièce (2) comporte au moins une saillie (300) permettant de positionner et de maintenir ledit élément décoratif (1), ladite saillie étant en appui seulement sur une portion limitée de l'élément décoratif (1).

19. Procédé selon la revendication précédente, **caractérisé en ce que** ladite ou lesdites portions d'appui limitées des saillies (300) contre l'élément décoratif (1) est complètement cachée par l'élément décoratif (1), en sorte que la ou les saillies ne laissent subsister après démoulage que des ouvertures (22) totalement cachées par l'élément décoratif (1).

20. Procédé selon l'une des revendications 18 ou 19, **caractérisé en ce que**, au cours de l'opération de moulage, ledit élément décoratif est maintenu sur ladite saillie (300) par des moyens magnétiques.

21. Procédé selon l'une des revendications 18 ou 19, **caractérisé en ce que**, au cours de l'opération de moulage, ledit élément décoratif est maintenu sur ladite saillie (300) par vide d'air.

## Patentansprüche

1. Gegenstand enthaltend einen Körper (2) aus gegossenem synthetischem Material und ein dekoratives Element (1), das bündig mit der äusseren Oberfläche (21) des genannten Körpers eingelassen ist, wobei das genannte dekorative Element aus einer Folie (15) eines zweiten Materials hergestellt ist, wobei das genannte dekorative Element mindestens zwei Teile (10, 11) enthält, die mit einer oder mehreren Befestigungen (12, 13) in Bezug zueinander positioniert sind,
**dadurch gekennzeichnet, dass**
das genannte dekorative Element aus einer Metallfolie hergestellt ist, dass mindestens der grösste Teil der genannten Befestigungen (12, 13) durch Tiefziehen unter die durch den sichtbaren Teil (10, 11) besetzten Ebene des genannten dekorativen Elements (1) zurückgestossen ist und dass mindestens der grösste Teil der Befestigungen (12, 13) durch das genannte synthetische Material (20) bedeckt ist.

2. Gegenstand nach dem vorangehenden Anspruch, **dadurch gekennzeichnet, dass** das dekorative Element (1) einen inneren Teil (11) undeinen äusseren Teil (10) enthält, der den inneren Teil einrahmt.

3. Gegenstand nach dem vorangehenden Anspruch, **dadurch gekennzeichnet, dass** der genannte innere Teil durch ein Kreuz (11) gebildet ist und dass die genannten Befestigungen (12, 13) zwischen den Enden von mindestens zwei gegenüberliegenden Armen des Kreuzes (11) und dem genannten äusseren Teil (10) angeordnet sind.

4. Gegenstand nach dem vorangehenden Anspruch, **dadurch gekennzeichnet, dass** das genannte Kreuz (11) symmetrisch zum Zentrum des genannten äusseren Teils (10) angeordnet ist.

5. Gegenstand nach einem der vorangehenden Ansprüche, **dadurch gekennzeichnet, dass** die genannte äussere Oberfläche (21) des Körpers und die genannte durch den sichtbaren Teil (10, 11) des genannten dekorativen Elements (1) besetzte Ebene gekrümmt sind.

6. Gegenstand nach dem vorangehenden Anspruch, **dadurch gekennzeichnet, dass** mindestens ein Teil (100, 110) der seitlichen Flanken des genannten dekorativen Elements abgeschrägt sind, um teilweise mit synthetischem Material bedeckt zu werden.

7. Gegenstand nach einem der vorangehenden Ansprüche, **dadurch gekennzeichnet, dass** mindestens ein Teil der durch das genannte synthetische Material (20) bedeckten Befestigungen (12, 13) im Wesentlichen parallel zu der durch den genannten sichtbaren Teil (10, 11) des genannten dekorativen Elements (1) besetzten Ebene ist.

8. Gegenstand nach dem vorangehenden Anspruch, **dadurch gekennzeichnet, dass** die genannten Befestigungen (12, 13) einen Teil enthalten, der im Wesentlichen parallel zu der durch den genannten sichtbaren Teil (10, 11) des genannten dekorativen Elements (1) besetzten Ebene ist, wie auch zwei seitliche Flanken (120, 130), die den genannten parallelen Teil der Befestigungen (12, 13) mit dem genannten sichtbaren Teil (10, 11) des dekorativen Elements (1) verbinden.

9. Gegenstand nach dem vorangehenden Anspruch, **dadurch gekennzeichnet, dass** die genannten seitlichen Flanken (120, 130) der Befestigungen (12, 13) im Wesentlichen rechtwinklig zur genannten durch den genannten sichtbaren Teil (10, 11) des genannten dekorativen Elements (1) besetzte Ebene sind.

10. Gegenstand nach Anspruch 8, **dadurch gekennzeichnet, dass** die genannten seitlichen Flanken (120, 130) der Befestigungen in Bezug auf die genannte durch den genannten sichtbaren Teil (10, 11) des genannten dekorativen Elements (1) besetzte Ebene schräg sind.

11. Gegenstand nach einem der Ansprüche 8 bis 10, **dadurch gekennzeichnet, dass** die Grenzkanten zwischen den genannten seitlichen Flanken (120, 130) und dem genannten sichtbaren Teil (10, 11) des dekorativen Elements (1) geradlinig mit einem Kantenwinkel nahe bei 90 Grad sind.

12. Gegenstand nach einem der vorangehenden Ansprüche, **dadurch gekennzeichnet, dass** er durch Formschneiden hergestellt ist, wobei die Verbindungen (150), die es erlauben, das genannte dekorative Element mit der genannten Metallfolie (15) provisorisch zu verbinden, nach der Formschneidoperation stehen gelassen werden und dass die genannten Verbindungen (150) vor ihrer Trennung durch Tiefziehen in eine andere Ebene als der sichtbare Teil (10, 11) zurückgestossen sind.

13. Taschenmesser enthaltend mindestens einen Seitenteil nach einem der vorangehenden Ansprüche.

14. Verfahren zur Herstellung eines Gegenstands (2) nach einem der vorangehenden Ansprüche, enthaltend nacheinander die folgenden Operationen:
Ausschneiden mindestens eines dekorativen Elements (1) aus Metallfolie (15), wobei das genannte dekorative Element mindestens zwei Teile (10, 11) enthält, die mit einer oder mehreren Befestigungen (12, 13) in Bezug aufeinander positioniert sind,
Giessen des Gegenstands (2) und Einlassen des genannten dekorativen Elements (1) bündig mit der äusseren Oberfläche (21) des Gegenstands (2),
**dadurch gekennzeichnet, dass** während des Einlassens des dekorativen Elements (1) durch Giessen ein dekoratives Element (1) eingebracht wird:
- dessen Teile (10, 11) durch Ausschneiden aus einer Folie (15) eines Materials erhalten wurden, mit Befestigungen (12, 13), die zwischen den genannten Teilen (10, 11) vorgesehen sind,
- wobei der grösste Teil der genannten Befestigungen (12, 13) durch Tiefziehen unter die durch den sichtbaren Teil (10, 11) des genannten dekorativen Elements (1) besetzte Ebene zurückgestossen wird, um nach der genannten Giessoperation mit synthetischem Material (20) bedeckt zu werden.

15. Verfahren nach dem vorangehenden Anspruch, **dadurch gekennzeichnet, dass** eine Mehrzahl dekorativer Elemente (1) gleichzeitig aus einer einzigen Metallfolie (15) ausgeschnitten werden.

16. Verfahren nach einem der Ansprüche 14 oder 15, **dadurch gekennzeichnet, dass** das oder die dekorativen Elemente (1) nach der Operation des Ausschneidens provisorisch durch die Verbindungen (150) mit der genannten Metallfolie (15) verbunden bleiben und dass die genannten Verbindungen (150) vor ihrer Trennung durch Tiefziehen in eine andere Ebene als der sichtbare Teil (10, 11) zurückgestossen werden.

17. Verfahren nach einem der Ansprüche 14 bis 16, **dadurch gekennzeichnet, dass** während der Operation des Giessens das genannte dekorative Element (1) zwischen einem ersten Giessformteil (32) und einem zweiten Giessformteil (30) gehalten wird.

18. Verfahren nach dem vorangehenden Anspruch, **dadurch gekennzeichnet, dass** der erste Giessformteil (32) der genannten äusseren Oberfläche (21) des Gegenstands entspricht und dass der zweite, der inneren Oberfläche des Gegenstands (2) entsprechende Giessformteil (30) mindestens einen Vorsprung (300) enthält, der es erlaubt, das genannte dekorative Element (1) zu positionieren und zu halten, wobei der genannte Vorsprung nur an einem begrenzten Teil des dekorativen Elements (1) anliegt.

19. Verfahren nach dem vorangehenden Anspruch, **dadurch gekennzeichnet, dass** der genannte oder die genannten Teile der Vorsprünge (300) mit begrenzter Anlage am dekorativen Element (1) vollständig durch das dekorative Element (1) versteckt ist oder sind, derart, dass der oder die Vorsprünge nach der Entformung nur Öffnungen (22) bestehen lassen, die durch das dekorative Element (1) vollständig versteckt sind.

20. Verfahren nach einem der Ansprüche 18 oder 19, **dadurch gekennzeichnet, dass** das genannte dekorative Element während der Giessoperation durch magnetische Mittel auf dem genannten Vorsprung (300) gehalten wird.

21. Verfahren nach einem der Ansprüche 18 oder 19, **dadurch gekennzeichnet, dass** das genannte dekorative Element während der Giessoperation durch Unterdruck auf dem genannten Vorsprung (300) gehalten wird.

## Claims

1. Piece comprising a body (2) of moulded plastic and a decorative element (1) inlaid flush with the outer surface (21) of said body, said decorative element being produced starting from a sheet (15) of a second material, said decorative element comprising at least two parts (10, 11) positioned, one with respect to the other, with one or more attachments (12, 13),
**characterised in that**
said decorative element is made starting from a metallic sheet, **in that** at least the greater portion of said attachments (12, 13) is pressed down by stamping below the plane occupied by the visible portion (10, 11) of said decorative element (1), and **in that** at least said greater portion of the attachments (12, 13) is covered over with said plastic material (20).

2. Piece according to the preceding claim, **characterised in that** the decorative element (1) includes an inner part (11) and an outer part (10) framing the inner part.

3. Piece according to the preceding claim, **characterised in that** said inner part is made up of a cross (11) and **in that** said attachments (12, 13) are disposed between the ends of at least two opposite branches of the cross (11) and said outer part (10).

4. Piece according to the preceding claim, **characterised in that** said cross (11) is disposed symmetrically at the centre of said outer part (10).

5. Piece according to one of the preceding claims, **characterised in that** said outer surface (21) of the body and said plane occupied by the visible portion (10, 11) of said decorative element (1) are curved.

6. Piece according to the preceding claim, **characterised in that** at least one portion (100, 110) of the lateral flanks of said decorative element are sloping in such a way as to be partially covered over with plastic material.

7. Piece according to the preceding claim, **characterised in that** at least one portion of the attachments (12, 13) covered over by said plastic material (20) is substantially parallel to the plane occupied by the visible portion (10, 11) of said decorative element (1).

8. Piece according to the preceding claim, **characterised in that** said attachments (12, 13) comprise a portion substantially parallel to the plane occupied by the visible portion (10, 11) of said decorative element (1) as well as two lateral flanks (120, 130) connecting said parallel portion of the attachments (12, 13) to said visible portion (10, 11) of the decorative element (1).

9. Piece according to claim 8, **characterised in that** said lateral flanks (120, 130) of the attachments (12, 13) are substantially perpendicular to said plane occupied by the visible portion (10, 11) of said decorative element (1).

10. Piece according to claim 8, **characterised in that** said lateral flanks (120, 130) of the attachments are oblique with respect to said plane occupied by the visible portion (10, 11) of said decorative element (1).

11. Piece according to one of the claims 8 to 10, **characterised in that** the demarcating edges between said lateral flanks (120, 130) and said visible portion (10, 11) of the decorative element (1) are straight with a cutting edge angle of close to 90°.

12. Piece according to one of the preceding claims, **characterised in that** it is produced by stamping, while leaving links (150) remain allowing said decorative element to remain provisionally connected to said metallic sheet (15) after the stamping operation, and **in that** said links (150) are pressed down by stamping into a different plane of the visible portion (10, 11) before their separation.

13. Pocket knife comprising at least one side according to one of the preceding claims.

14. Method of producing a piece (2) according to one of the preceding claims, comprising the following successive operations:
cutting at least one decorative element (1) into a metallic sheet (15), said decorative element including at least two parts (10, 11) positioned, one with respect to the other, with one or more attachments (12, 13),
moulding the piece (2) and inlaying said decorative element (1) flush with the outer surface (21) of the piece (2),
**characterised in that**, when inlaying the decorative element (1) by moulding, a decorative element (1) is used:
- the parts (10, 11) of which are obtained by cutting into the sheet (15) of material, with the attachments (12, 13) provided between said parts (10, 11),
- of which the greater portion of said attachments (12, 13) is pressed down by stamping below the plane occupied by the visible portion (10, 11) of said decorative element (1) in such a way as to be covered by plastic material (20) at the time of moulding.

15. Method according to the preceding claim, **characterised in that** a plurality of decorative elements (1) are cut simultaneously in a single metallic sheet (15).

16. Method according to one of the claims 14 or 15, **characterised in that**, after the cutting operation, the decorative element or elements (1) remain provisionally connected to said metallic sheet (15) by links (150), and **in that** said links (150) are pressed down by stamping into a different plane of the visible portion (10, 11) before their separation.

17. Method according to one of the claims 14 to 16, **characterised in that**, during the moulding operation, said decorative element (1) is held between a first mould element (32) and a second mould element (30).

18. Method according to the preceding claim, **characterised in that** the first mould element (32) corresponds to said outer surface (21) of the piece, and **in that** the second mould element (30) corresponding to the inner surface of the piece (2) includes at least one projection (300) allowing said decorative element (1) to be positioned and held, said projection being supported only on a limited portion of the decorative element (1).

19. Method according to the preceding claim, **characterised in that** said limited supporting portion or portions of the projections (300) against the decorative element (1) is completely concealed by the decorative element (1) in such a way that the projection or projections only leave openings (22) which are totally concealed by the decorative element (1) after removal from the mould.

20. Method according to one of the claims 18 or 19, **characterised in that** during the moulding operation, said decorative element is held on said projection (300) by magnetic means.

21. Method according to one of the claims 18 or 19, **characterised in that** during the moulding operation, said decorative element is held on said projection (300) by vacuum.
